# EUROPEAN PATENT APPLICATION

(11) **EP 1 906 594 A1**
(43) Date of publication of application: **02.04.2008**
(21) Application number: 06020453.4
(22) Date of filing: 28.09.2006
(51) Int. Cl.: H04L 12/28

(54) **Security monitoring device and method for security monitoring for wireless transmissions**

(71) Applicant: SIEMENS AKTIENGESELLSCHAFT, 80333 München (DE)
(72) Inventor: Ramirez, Alejandro, 80799 München (DE)

(57) **Abstract**

The invention consists of a method for security monitoring and a device for security monitoring where the device is logically and physically independent of the wireless network that is to be monitored. The device only receives data frames sent in the network. Received wireless data frames are analyzed and possible attacks on network security are detected. Only when an attack is detected will the device give a warning, e.g. through a cable network connection. The device does not participate in the network otherwise.

## Description

The invention is related to security in an at least partially wireless network and in particular to a security monitoring device for monitoring wireless transmissions in an at least partially wireless network.

Security is an important issue in computer networks such as local area networks (LANs). Today, wireless local area networks (WLANs) are increasingly employed to connect desktop computers, laptops, PDAs, mobile phones and other devices to a network while maintaining a certain level of mobility and flexibility. WLANs are used both in public areas where potential users are anonymous as well as in home networks.

Two factors make security in a WLAN even more important than in a cable-bound LAN. Firstly, connecting to a WLAN does not require physical access to a network cable or network device. Additionally, the radio-frequency waves used for communication in a WLAN are not easily blocked by walls or other obstructions. This means that not only public networks but also home networks are subject to intrusion by anonymous users.

Known and commonly used security measures include using access passwords that a user must know to be able to access the WLAN, encryption keys that a WLAN station must know to decode encrypted packets and firewalls to block packets of a possibly harmful origin. These security measures are commonly implemented e.g. in access points, network aware switches or in a centralized network managing unit.

It is an object of the present invention to provide a security monitoring device and method for security monitoring of a network which serve to enhance security of an at least partially wireless network.

Concerning the security monitoring device this is accomplished by the features of claim 1. Concerning the method it is accomplished by the features of claim 11.

The security monitoring device for monitoring of at least one wireless connection comprises:
- a wireless transceiver for receiving wirelessly transmitted data;
- processing means for discovering an attack on security of the wireless connection using received wirelessly transmitted data;
- reporting means for reporting a discovered attack.

The security monitoring device, upon receiving first wirelessly transmitted data,
- checks if, when using the wireless transmission protocol used in the wireless connection, it should answer the first wirelessly transmitted data by sending second wirelessly transmitted data;
- decides whether to answer the first wirelessly transmitted data.

The device is implemented as a stand-alone system which is essentially independent of other components or devices. It does not share its elements, such as the transceiver or processing means, with other devices. Neither does it use such means of other devices.

As an alternative solution, the device may be implemented as software code running on a computer system or it may be implemented as hardware parts of a larger computer system, thus sharing its elements with other devices.

The device features a wireless transceiver such as an antenna. The wireless transceiver receives wirelessly transmitted data and forwards it to the processing means, which may be a processor as commonly used e.g. in a personal computer (PC) or a micro-processor as commonly used in integrated circuits.

The processing means analyzes the received data for discovering an attack on security of the wireless connection. When such an attack is detected, the reporting means is used to report a discovered attack.

Various attacks on security are known from the state of the art. Attack on security is meant e.g. to include any action(s) with which a wireless network node tries to gain an unwarranted advantage such as access to the wireless network or tries to disrupt the normal function of the wireless network. Attacks on security are, among others:
- Denial-of-Service attack;
- Disassociation attack;
- Deauthentication attack;
- Replay attack;
- Packet generation attack;
- MAC address spoofing;

The invention recognizes and addresses a substantial disadvantage of service set defence systems for a wireless network known from the state-of-the-art. This disadvantage lies in the fact the defence systems always reside and are part of devices and systems which otherwise are an active part of the network. Examples of such devices and systems are network nodes, access points or centralized management units. An access point, for example, through its function is forced to take an active part in transmissions in the network. In particular it has to answer transmissions directed to it from a network node at least when it is not absolutely clear that this network node is trying to get unauthorized access to the network. When the security means of a network device is compromised, the device itself is compromised, posing a threat to other devices in the network.

In short, security means in such devices are part of the network infrastructure they are trying to protect. This leads to them being vulnerable through the participation of their host device in the network.

Contrary to that, the security monitoring device provided by the present invention is more independent of the network that it monitors, both physically and logically than other network nodes.

This is achieved by having the security monitoring device decide for each received wirelessly transmitted data whether it should answer these data. Contrary to other devices which follow the protocol used for the wireless connection, for example answers to data which seem to be part of an attack can therefore be avoided, thus improving the security of the security monitoring device.

In an advantageous embodiment of the invention the security monitoring device does not answer broadcast frames. This means that the security monitoring device does not take part for example in routing algorithms that use broadcast messages. It therefore will not act as a forwarding node. This serves to make the security monitoring device more invisible to the network, as it avoids advertising its presence through answers to broadcast data.

Additionally or alternatively, the security monitoring device does not answer data directed to it. This means that the security monitoring device does not respond to data which is expressly addressed to it. This further serves to make the security monitoring device more independent from network activity and thus less attackable.

In an advantageous embodiment, the security monitoring device does not answer any data. In one alternative, the transceiver may be built to only facilitate receiving data. In another alternative, the transceiver may feature the ability to also transmit data but this ability is not used.

This makes the security monitoring device completely invisible to other devices, as it does not respond to any transmissions or transmit anything of its own volition. This also means that the security monitoring device will not for example act as a gateway. Thus, the security monitoring device is essentially unbreakable.

In this embodiment it is also possible to build the security monitoring device in a simplified and even more secure way as it is possible to omit any processing which is used to answer data as intended in the wireless transmission protocol used in the wireless connection. Instead the only processing necessary is that which is used to analyze the data in order to identify attacks.

In a further embodiment, the reporting means comprises at least one of:
- transmission means for wired transmission of data;
- optical announcement means;
- acoustical announcement means.

For example, the security monitoring device may have an interface for a wired network such as an RJ-45 plug. When an attack is detected, it will report this via the interface to, e.g., an administrator computer. As an alternative or additionally, the security monitoring device can give a visual or acoustical signal by flashing an LED a giving a warning sound.

The described reporting advantageously avoids the presence of the security monitoring device from becoming known to an attacker even when the security monitoring device has detected an attack, as even then no wireless transmission is conducted.

In another alternative or additionally to the other possibilities the security monitoring device may use its wireless transceiver in the instance it detects an attack to transmit one or more warnings, for example as data packets. In this alternative embodiment, it is also possible that the security monitoring device blocks further transmissions in the network upon detecting an attack, for example by sending constant signals. This alternative reporting means has the advantage that no physical connection such as a wired network interface is necessary and the device may even be positioned out of sight.

In a further embodiment of the invention the security monitoring device, discovering an attack involves checking the received wirelessly transmitted data on layer 2. Preferentially said checking the received wirelessly transmitted data is performed only on layer 2.

The discovering of an attack for example may include the following procedures:
- detecting MAC address spoofing through MAC fingerprinting;
- detecting the distance of a network node from at least one other network node;

For MAC fingerprinting, the security monitoring device detects a short frame exchange, for example the exchange of a data and an acknowledge frame (ACK) by two network nodes. It then measures the time elapsed between the arrivals of the two frames. A large part of this time is the so-called SIFS time (SIFS = Short Interframe Space) which network nodes are forced to wait before sending an ACK frame when WLAN is used as a wireless transmission protocol. The SIFS time however varies with the hardware which is used in the respective network node. A relation between MAC address and SIFS time may therefore be used to discover forged MAC addresses.

The same frame exchange or a similar frame exchange may be used to discover the distance to a network node. A node which is much more distant than is expected for nodes of the wireless connection may be considered an attacking node. To discover the distance, a procedure is used which is given in more detail with respect to the figures.

In a further embodiment of the invention the security monitoring device additionally comprises a first memory means for storing information about said received wirelessly transmitted data. The processing means additionally uses said information for discovering an attack on security.

The security monitoring device may store part or all of received data. It may also select which about which received data information is to be stored. For example, the processing means may decide that a received data frame is harmless and therefore no information is to be stored. Another data frame is considered a possible attack; therefore information for this data frame is stored in the memory. The information may include e.g. header information, MAC addresses or other parts of the data frame.

In a further embodiment of the invention the security monitoring device additionally comprises a second memory means for storing network security data. The second memory means and the first memory means may be one memory means or different memory means.

This network security data may for example include access passwords, valid login names or encryption keys. With this information stored in the second memory means the security monitoring device is able to better judge whether packets are a threat to network security. The encryption keys for example will enable the security monitoring device to decode encrypted data packets and thus read and analyze more of the information contained therein.

The method for security monitoring of an at least partially wireless network using a security monitoring device comprises the following steps performed by the security monitoring device:
- receiving wirelessly transmitted data;
- analyzing the received wirelessly transmitted data to discover an attack on security of the wireless connection;
- when an attack is discovered, reporting the attack using a reporting means;
- upon receiving first wirelessly transmitted data, checking if, when using the wireless transmission protocol used in the wireless connection, the security monitoring device should answer the first wirelessly transmitted data by sending second wirelessly transmitted data;
- deciding whether to answer the first wirelessly transmitted data.

The network comprises wirelessly communicating network nodes and at least one security monitoring device according to the present invention.

Additional details and advantages of the present invention will be explained with reference to the drawing, wherein:
Figure 1 depicts in a flowchart form a schematic of the method for security monitoring;
Figure 2 depicts in a flowchart an alternative form of the method for security monitoring;
Figure 3 depicts a schematic of a service set defence system;
Figure 4 shows a graph of time intervals for the SIFS time measured by the service set defence system;
Figure 5 shows a schematic of the elapsed time during a frame exchange;

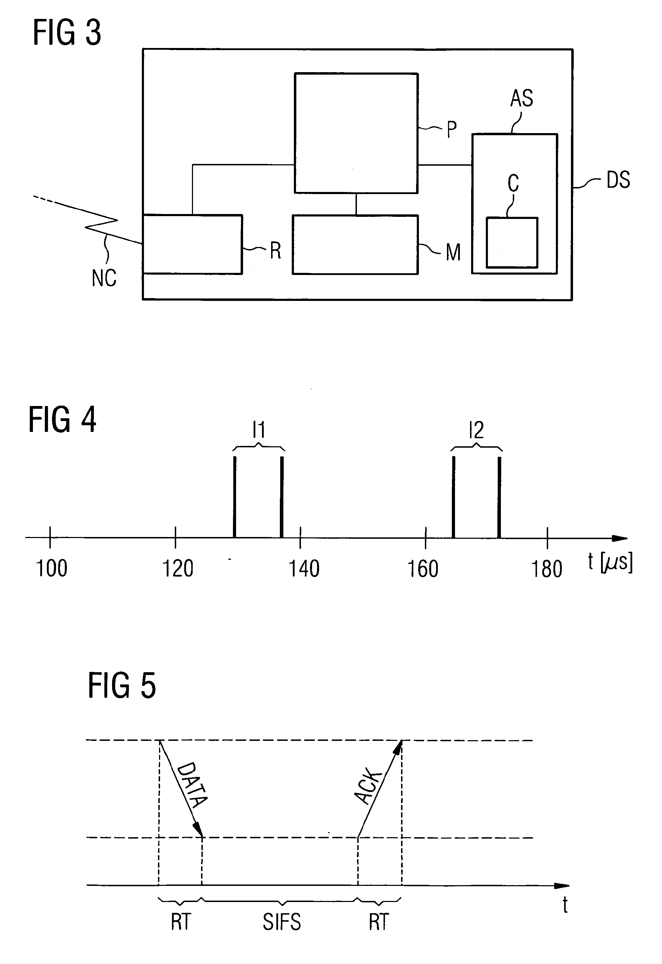

Fig. 3 depicts a service set defence system DS for security monitoring an at least partially wireless network. The network is a wireless local area network WLAN. The service set defence system DS comprises of an antenna system AS which acts as a receiving means for wireless transmissions which are conducted within the network. It is thus constructed to be able to receive WLAN transmissions. The antenna system AS includes a controller C which controls the functions of the antenna system AS. The controller C is implemented in such a way that it enables the antenna system AS exclusively to receive transmissions. In other words, the antenna system AS with its controller C is unable to perform any transmission itself.

The antenna system AS is connected with a processor P that acts as a processing means within the service set defence system DS. The processor P takes data frames transmitted wirelessly and received by the antenna system AS and analyzes them in order to detect an attack on the security of the network.

One example for the analysis is MAC fingerprinting. MAC fingerprinting can be performed by the service set defence system DS by receiving a frame exchange such as an exchange of a data frame DATA and an acknowledge frame ACK as depicted in fig. 5. The time that the exchange takes is mainly governed by the SIFS time, SIFS = Short Interframe Space, that a WLAN station is forced to wait before sending the acknowledge frame ACK. When the service set defence system DS measures the time that elapses during the frame exchange this measurement will experience a slight shift due to the distance of the service set defence system DS from the network nodes which perform the frame exchange. This shift however is small compared to the SIFS time. The SIFS time in turn depends on the hardware which is used in a network node.

One hardware type, e.g. may lead to a SIFS time of 162µs while hardware in another node may use a SIFS time of only 148µs. The service set defence system DS can make many measurements to obtain an average value for the SIFS time of a particular node.

Fig. 4 depicts a possible result of measurements of the time of the frame exchange for two different hardware types. The response times come to lie within two separate time intervals I1, 2, where a first time interval I1 is between ~130µs and 138µs and a second time interval I2 is between 165 and 170µs, approximately. The response times of a first hardware will lie within the first time interval I1, while the response times of a second hardware will lie within the second time interval I2. The distance between the service set defense system and the network nodes that contain the first and second hardware results in a shift of the measured times that is usually much smaller than the width of the time intervals I1, 2.

The service set defence system DS, in an embodiment, may keep a table in its memory where MAC addresses are stored in relation to the SIFS time or average SIFS time measured for one of the MAC addresses. Using this table, the service set defence system DS can be able to ascertain that a network node which uses a certain MAC address - that is stored in the table - is not actually the network node it pretends to be.

Using the table with averaged values for the SIFS time of a certain network node the service set defence system DS may also attempt to identify a possible attacking network node by estimating its distance to itself. A node that is much more distant than all other nodes or more distant than a preset distance value is considered a possible attacking network node.

To obtain the distance to a first network node, the service set defence system DS calculates the difference between a first and second elapsed frame exchange times. The first elapsed frame exchange time is the time elapsed when the first network node sends a data frame DATA and a second network node answers this frame with an acknowledge frame ACK. The second elapsed frame exchange time is the time measured by the service set defence system DS when the frame exchange is reversed, i.e. when the first network node answers a data frame DATA with an acknowledge frame ACK.

If both the first and second network node is near the service set defence system DS, the difference will be close to zero, when adjusted for the different SIFS times used by the first and second network node. If however the first network node is much farther away than the second network node, then the difference will be of the magnitude of the signal round-trip time 2*RT, which is of the order of 0.1µs for distances of ~30m or 1µs for distances of ~300m.

Other possibilities of obtaining the distance to a network node may be used. For example other nodes of the wireless network, e.g. gateways may in collaboration obtain the distance to a node and, by communicating the measured distances, obtain its position. The service set defence system DS may use the communicated distances to elucidate its distance or position itself.

After having analyzed a data frame, the processor P decides whether information about the data frame is to be stored in a memory M that is also part of service set defence system DS. The processor P will store information about the data frame when it has decided that the data frame is part of an attack on the network security or when processor P has indications that the data frame might be part of an attack on the network security.

By storing information about the data frame in the memory M the processor P can later access this information and use it to reach a better decision whether subsequent data frames are part of an attack on the network security.

If the processor P reaches the decision that the data frame is actually part of an attack on the network security, it will activate the reporting means R that is part of the service set defence system DS. The reporting means R is in this example of the service set defence system DS connected to a network cable. The reporting means R will send a network packet to an administrator computer indicating that it believes an attack on the network is being performed. An administrator can then for example use this information to perform counter-measures.

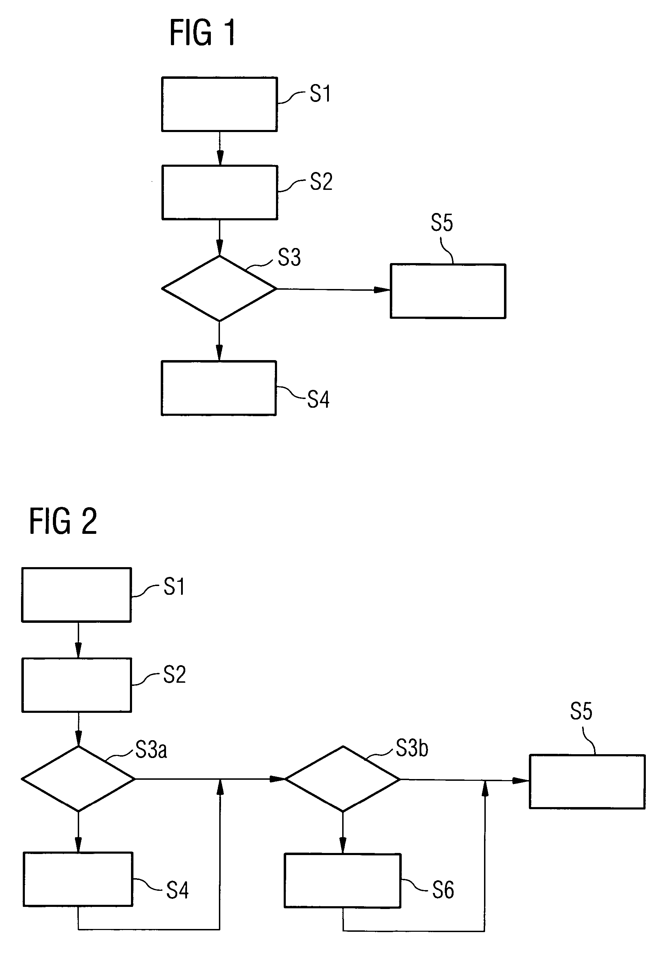

The procedure that is used within the service set defence system DS is depicted in Figures 1 and 2. Figure 1 shows a reduced version of the procedure. This version is for example applicable to a service set defence system DS which is built without a memory M to store information about received data frames. Figure 2 shows an extended version of the procedure which is applicable to a service set defence system DS that includes a memory M to store information about received data frames such as the one depicted in Figure 3.

In both versions of the procedure it begins when the service set defence system DS receives a data frame in a first step S1. In a second step S2 the data frame is analyzed by the processor P, e.g. as detailed above. In a third step S3, S3a of the procedure, the processor P decides whether the data frame constitutes a danger to the network security, i.e. whether it is at least part of an attack.

From this point onwards, the two versions of the procedure differ somewhat. In the reduced version depicted in Figure 1, the processor P of the service set defence system DS will then execute one of two choices. If the data frame is considered to be part of an attack, it will in a fourth step S4 activate the reporting means R and issue a warning as described above. If however the processor P decides that the data frame is harmless it will in a fifth step S5 discard the data frame. Afterwards it will enter a state of waiting for subsequent data frames transmitted in the network.

In the extended procedure depicted in Figure 2, the processor will as part of the third step S3a access the information stored in the memory M to reach a more informed decision about the data frame. If it considers the data frame to be part of an attack, it will in a fourth step S4 activate the reporting means R and issue a warning. It will then continue with a sub-step of the third step S3b.

This sub-step of the third step S3b is also reached when the processor P cannot decide that a data frame is part of an attack. In this sub-step of the third step S3b the processor P decides whether information about the data frame is to be stored in the memory M for later use in evaluating subsequent data frames. If the processor P decides that this should be done, it will store information in a sixth step S6 in the memory M.

In both cases, i.e. whether or not information is stored in the memory M, the data frame is then discarded in the fifth step S5. Thereafter, the service set defence system DS will enter a state of waiting for subsequent data frames transmitted in the network.

It must be noted that a service set defence system DS may use the reduced version of the procedure whether it has a memory M or not and independent of the capabilities of this memory M, however using the memory M to store information about data frames is advantageous to the detection of attacks.

In an alternative embodiment of the invention, the aspects of which may be combined arbitrarily with those described above, the memory M of the service set defence system DS is used to store encryption keys and/or access passwords used within the network. This may be done in addition or alternatively to storing information about data frames in the memory M.

In this alternative of the service set defence system DS the processor P is enabled to not only evaluate freely readable parts of a data frame, for example header information, but also encrypted parts of the data frame. This in turn will enable it to detect a wider range of attacks on the network security.

When a password or encryption key changes or a new password or encryption key is used within the network this can be communicated to the service set defence system DS. In principle it is possible to have the processor P examine a data frame whether it is intended for the service set defence system DS and contains information on a new or changed password or encryption key. However for security reasons it is advantageous to add a cable network interface to the service set defence system DS. New passwords or encryption keys can only be entered through this interface into the service set defence system DS. Advantageously the interface would be disconnected externally when there are no new passwords or encryption keys, rendering the stored information about passwords and encryption keys unchangeable by outside influence.

## Claims

1. Security monitoring device (DS) for monitoring of at least one wireless connection, comprising:
- a wireless transceiver (AS) for receiving wirelessly transmitted data (ACK, DATA);
- processing means (P) for discovering an attack on security of the wireless connection using received wirelessly transmitted data (ACK, DATA);
- reporting means (R) for reporting a discovered attack, wherein the security monitoring device (DS), upon receiving first wirelessly transmitted data (ACK, DATA),
- checks if, when using a wireless transmission protocol used in the wireless connection, it should answer the first wirelessly transmitted data (ACK, DATA) by sending second wirelessly transmitted data;
- decides whether to answer the first wirelessly transmitted data (ACK, DATA).

2. Security monitoring device (DS) according to claim 1, which does not answer first wirelessly transmitted data when it is broadcast data.

3. Security monitoring device (DS) according to claim 2, which does not answer first wirelessly transmitted data directed to it.

4. Security monitoring device (DS) according to claim 3, which does not answer any first wirelessly transmitted data.

5. Security monitoring device (DS) according to one of the preceding claims, wherein said reporting means (R) comprises at least one of:
- a transmission means for wireless transmission of data;
- transmission means for wired transmission of data;
- optical announcement means;
- acoustical announcement means.

6. Security monitoring device (DS) according to one of the preceding claims, wherein said discovering an attack involves checking the received wirelessly transmitted data (ACK, DATA) on layer 2.

7. Security monitoring device (DS) according to claim 6, wherein said checking the received wirelessly transmitted data (ACK, DATA9 is performed only on layer 2.

8. Security monitoring device (DS) according to one of the preceding claims, wherein said discovering an attack includes performing a MAC fingerprinting analysis.

9. Security monitoring device (DS) according to one of the preceding claims, which additionally comprises a first memory means (M) for storing information about the received wirelessly transmitted data (ACK, DATA) and wherein said processing means (P) additionally uses said information for discovering an attack on security.

10. Security monitoring device (DS) according to claim 1, which additionally comprises a second memory means for storing network security data.

11. Method for security monitoring of an at least partially wireless network using a security monitoring device (DS), comprising the steps performed by the security monitoring device (DS):
- receiving wirelessly transmitted data (ACK, DATA);
- analyzing the received wirelessly transmitted data (ACK, DATA) to discover an attack on security of the wireless connection;
- if an attack is discovered, reporting the attack using a reporting means (R);
- upon receiving first wirelessly transmitted data (ACK, DATA), checking if, when using the wireless transmission protocol used in the wireless connection, the security monitoring device (DS) should answer the first wirelessly transmitted data (ACK, DATA) by sending second wirelessly transmitted data;
- deciding whether to answer the first wirelessly transmitted data.

12. Network with wirelessly communicating network nodes, containing at least one security monitoring device (DS) according to one of the claims 1 to 10.
